(19) Europäisches Patentamt
European Patent Office
Office européen des brevets

(11) **EP 4 109 701 A1**

(12) **EUROPÄISCHE PATENTANMELDUNG**

(43) Veröffentlichungstag:
**28.12.2022  Patentblatt 2022/52**

(21) Anmeldenummer: **21181105.4**

(22) Anmeldetag: **23.06.2021**

(51) Internationale Patentklassifikation (IPC):
*H02J 7/00* (2006.01)   *B25F 5/00* (2006.01)
*G01R 31/382* (2019.01)

(52) Gemeinsame Patentklassifikation (CPC):
**H02J 7/0016; B25F 5/00; G01R 31/382;**
**H02J 7/00714;** H02J 2207/20

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Hilti Aktiengesellschaft**
**9494 Schaan (LI)**

(72) Erfinder: **Lacher, Michael**
**86830 Schwabmünchen (DE)**

(74) Vertreter: **Hilti Aktiengesellschaft**
**Corporate Intellectual Property**
**Feldkircherstrasse 100**
**Postfach 333**
**9494 Schaan (LI)**

(54) **WERKZEUGMASCHINE UND VERFAHREN ZUR DURCHFÜHRUNG EINES LADUNGSAUSGLEICHS ZWISCHEN AKKUMULATOREN IN EINER WERKZEUGMASCHINE**

(57)    Die Erfindung betrifft eine Werkzeugmaschine mit einem ersten Akkumulator und einem zweiten Akkumulator, wobei die Werkzeugmaschine eine erste Leistungselektronik mit einem ersten Inverter und eine zweite Leistungselektronik mit einem zweiten Inverter aufweist, wobei der erste Inverter dem ersten Akkumulator zugeordnet ist und der zweiten Inverter dem zweiten Akkumulator zugeordnet ist. Die erste Leistungselektronik umfasst eine erste Ladungsausgleichs-Vorrichtung, während die zweite Leistungselektronik eine zweite Ladungsausgleichs-Vorrichtung umfasst. Die Ladungsausgleichs-Vorrichtungen sind zur Durchführung eines Ladungsausgleichs zwischen den Akkumulatoren eingerichtet. In einem zweiten Aspekt betrifft die Erfindung ein Verfahren zur Durchführung eines Ladungsausgleichs zwischen zwei Akkumulatoren in einer Werkzeugmaschine. Die Durchführung des Ladungsausgleichs erfolgt dabei vorzugsweise durch eine unterschiedliche Lastaufteilung über die Ladungsausgleichs-Vorrichtungen der Leistungselektroniken.

Fig. 5

## Beschreibung

Die Erfindung betrifft eine Werkzeugmaschine mit einem ersten Akkumulator und einem zweiten Akkumulator, wobei die Werkzeugmaschine eine erste Leistungselektronik mit einem ersten Inverter und eine zweite Leistungselektronik mit einem zweiten Inverter aufweist, wobei der erste Inverter dem ersten Akkumulator zugeordnet ist und der zweiten Inverter dem zweiten Akkumulator zugeordnet ist. Die erste Leistungselektronik umfasst eine erste Ladungsausgleichs-Vorrichtung, während die zweite Leistungselektronik eine zweite Ladungsausgleichs-Vorrichtung umfasst. Die Ladungsausgleichs-Vorrichtungen sind zur Durchführung eines Ladungsausgleichs zwischen den Akkumulatoren eingerichtet. In einem zweiten Aspekt betrifft die Erfindung ein Verfahren zur Durchführung eines Ladungsausgleichs zwischen zwei Akkumulatoren in einer Werkzeugmaschine. Die Durchführung des Ladungsausgleichs erfolgt dabei durch die Ladungsausgleichs-Vorrichtungen der Leistungselektroniken.

## Hintergrund der Erfindung:

Im Stand der Technik sind Werkzeugmaschinen bekannt, mit denen unterschiedliche Arbeiten durchgeführt werden können. Beispielsweise sind Bohrhämmer, Meißelgeräte, Trenn- oder Winkelschleifer, Schraubgeräte oder Kernbohrgeräte bekannt, bei denen jeweils ein Werkzeug durch einen Motor angetrieben wird. Eine Energieversorgung kann über einen Netzanschluss oder mit Batterien oder Akkumulatoren ("Akkus") bereitgestellt werden.

Es sind eine Reihe von Anwendungsfällen solcher Werkzeugmaschinen bekannt, bei denen hohe Leistungen erforderlich sind, um die entsprechenden Arbeiten durchzuführen. Bei Werkzeugmaschinen, deren Energieversorgung von einem Akkumulator gebildet wird, kann es vorkommen, dass die für die Arbeit erforderliche Leistung die maximal mögliche Abgabeleistung des Akkus übersteigt. Um dieser Herausforderung zu begegnen, werden solche Werkzeugmaschinen häufig mit einer Schnittstelle für zwei Akkumulatoren ausgestattet, um mit zwei Akkus, die in Reihe oder parallel geschaltet werden können, die gewünschte Leistung bereitstellen zu können.

Bei der Arbeit mit Werkzeuggeräten mit zwei Akkumulatoren kann aber folgendes Problem auftreten: Wenn einer der Akkus ganz oder teilweise entladen ist, kann für die Werkzeugmaschine nicht über den gesamten Arbeitszeitraum die volle Leistung erbracht werden. Sobald einer der Akkus vollständig entladen ist, kann keine weitere Leistung aus den Akkus entnommen werden. Die Arbeit mit der Werkzeugmaschine muss dann möglicherweise - trotz vorhandener Restladung in einer der beiden Akkus - beendet werden.

Aus dem Stand der Technik sind Werkzeugmaschinen mit zwei Akkumulatoren bekannt, bei denen die Akkus in Reihe geschaltet und auf einer Leistungselektronik geführt sind. Bei solchen konventionellen Werkzeugmaschinen sind die Leistungselektronik und der Motor der Werkzeugmaschine auf eine doppelte Betriebsspannung ausgelegt. Die doppelte Betriebsspannung entspricht dabei dem Doppelten der Spannung eines der Akkumulatoren.

Darüber hinaus sind im Stand der Technik Werkzeugmaschinen bekannt, deren Motoren mehrere Wicklungssysteme bzw. Wicklungsgruppen umfassen.

Nachteilig bei diesen Werkzeugmaschinen, wie sie aus dem Stand der Technik bekannt sind, ist, dass die Gesamtleistung jeweils maßgeblich durch das Leistungsvermögen des schwächeren Akkumulators bestimmt wird. Eine Aufteilung der Einzelleistungen bezogen auf den Zustand des Akkus ist nicht möglich. Eine solche Aufteilung der Einzelleistungen wird im Sinne der Erfindung bevorzugt als "unidirektionale Anpassung" bezeichnet. Es kann vorkommen, dass nach Abschaltung einer Unterspannung in einem der beiden Akkumulatoren eine erhebliche Restladung vorhanden ist, die auch nicht mehr verwertet werden kann, ohne dass eine Aufladung der Werkzeugmaschine bzw. ihrer Akkumulatoren erfolgt.

Aufgabe der vorliegenden Erfindung ist es daher, die vorstehend beschriebenen Mängel und Nachteile des Standes der Technik zu überwinden und eine Werkzeugmaschine mit mindestens zwei Akkumulatoren sowie ein Verfahren zur Durchführung eines Ladungsausgleichs zwischen zwei Akkumulatoren in einer Werkzeugmaschine bereitzustellen, mit denen ein verbesserter Ladungsausgleich zwischen den Akkus ermöglicht werden soll. Ein Anliegen der Erfindung ist insbesondere auch, dass der Ladungsausgleich in beide Richtungen erfolgen soll. Die Fachwelt würde es darüber hinaus begrüßen, wenn eine technische Lösung bereitgestellt werden könnte, mit der ein Ladungsausgleich zwischen den Akkumulatoren einer Werkzeugmaschine zumindest auch während des Betriebs bzw. während der Arbeit mit der Werkzeugmaschine durchgeführt werden kann.

Die Aufgabe wird gelöst durch den Gegenstand der unabhängigen Ansprüche. Vorteilhafte Ausführungsformen des erfindungsgemäßen Gegenstands werden in den abhängigen Ansprüchen beschrieben.

## Beschreibung der Erfindung:

Die Aufgabe wird dabei in einem ersten Aspekt durch eine Werkzeugmaschine mit einem ersten Akkumulator und einem zweiten Akkumulator gelöst, wobei die Werkzeugmaschine eine erste Leistungselektronik mit einem ersten Inverter und eine zweite Leistungselektronik mit einem zweiten Inverter aufweist, wobei der erste Inverter dem ersten Akkumulator zugeordnet ist und der zweiten Inverter dem zweiten Akkumulator zugeordnet ist. Die erste Leistungselektronik umfasst eine erste Ladungsausgleichs-Vorrichtung und die zweite Leistungselektronik umfasst eine zweite Ladungsausgleichs-Vorrichtung, wobei die Ladungsausgleichs-Vorrichtungen zur Durchführung eines Ladungsausgleichs zwischen den Akkumulatoren eingerichtet sind.

Die Erfindung betrifft insbesondere ein Antriebssystem für eine elektrische Werkzeugmaschine. Die Werkzeugmaschine kann einen bürstenlosen Motor umfassen, wobei der Motor gemäß der vorliegenden Erfindung von zwei voneinander getrennten Akkumulatoren und Leistungselektroniken bestromt wird. Mit anderen Worten kann mit der Erfindung eine Werkzeugmaschine mit zwei getrennten Leistungselektroniken bereitgestellt werden, bei der die zwei Akkumulatoren über die Leistungselektroniken mit dem Motor der Werkzeugmaschine verbunden werden. Es ist im Sinne der Erfindung bevorzugt, dass die Komponenten des Systems so miteinander verknüpft vorliegen bzw. interagieren, dass im normalen Betrieb der Werkzeugmaschine eine Bestromung des Motors basierend auf den Zuständen der Akkumulatoren optimiert wird. Diese Optimierung kann dadurch erreicht werden, dass die Ladungsausgleichs-Vorrichtungen der Leistungselektroniken zur Durchführung eines Ladungsausgleichs zwischen den Akkumulatoren eingerichtet sind. Es ist im Sinne der Erfindung bevorzugt, dass die zur Durchführung eines Ladungsausgleichs vorgesehenen Ladungsausgleichs-Vorrichtungen Steuerungsblöcke zur optimierten Aufteilung einer Leistung zwischen den Akkumulatoren darstellen. Der Ausgleich der Ladungen erfolgt vorzugsweise durch Ströme bzw. Stromflüsse, wobei die Stromflüssen unter Verwendung der unten angegebenen Formeln ermittelt werden können.

Vorzugsweise wird im Kontext der vorliegenden Erfindung der elektrische Leistungspfad ausgehend von den beiden Akkumulatoren über getrennte Leistungselektroniken auf den Motor der Werkzeugmaschine geführt. Der Motor kann - wie später ausführlicher dargestellt wird - über getrennte Wicklungssysteme verfügen. Das bedeutet im Sinne der Erfindung bevorzugt, dass der Motor der Werkzeugmaschine, der vorzugsweise einen Rotor und einen Stator aufweist, zwei Wicklungssysteme umfasst. Es ist im Sinne der Erfindung bevorzugt, dass der Stator des Motors der Werkzeugmaschine ein erstes und eine zweites Wicklungssystem umfasst, so dass der Stator des Motors der vorgeschlagenen Werkzeugmaschine im Sinne der Erfindung bevorzugt als "doppelt gewickelter Stator" bezeichnet wird. Vorzugsweise umfasst der Motor einen Rotor und einem Stator mit einem ersten Wicklungssystem und einem zweiten Wicklungssystem. Es ist im Sinne der Erfindung insbesondere bevorzugt, dass das Wicklungssystem als Dreiphasen-Wicklungssystem ausgebildet ist. Das bedeutet im Sinne der Erfindung bevorzugt, dass der Motor der vorgeschlagenen Werkzeugmaschine vorzugsweise drei Motorphasen je Wicklungssystem umfasst. Es ist im Sinne der Erfindung bevorzugt, dass ein Wicklungssystem bei einem dreiphasigen Motor drei Wicklungen umfasst, wobei die Wicklungen in einem Stern oder in einem Dreieck verschaltet vorliegen können.

Die Leistungselektroniken der Werkzeugmaschine umfassen je einen Inverter. Der Ladungsausgleich zwischen den Akkus der Werkzeugmaschine kann insbesondere dadurch optimiert werden, dass der erste und der zweite Inverter der Leistungselektroniken dazu eingerichtet sind, Zustandsdaten in Bezug auf die Akkumulatoren zu ermitteln. Die Zustandsdaten können anschließend über eine Kommunikationsverbindung, die zwischen den Invertern besteht, miteinander ausgetauscht werden. Dabei können beispielsweise Rohdaten ausgetauscht werden. Es kann aber im Sinne der Erfindung auch bevorzugt sein, dass bereits bearbeitete Daten oder die Ergebnisse von Auswertungen und Analysen, die innerhalb der Inverter durchgeführt werden, ausgetauscht werden. Die Kommunikationsverbindung kann beispielsweise als Controller Area Network (CAN) oder als Universal Asynchronous Receiver Transmitter (UART) ausgebildet sein.

Zur Erfassung der Zustandsdaten umfassen die Leistungselektroniken Sensoren und/oder Messvorrichtungen. Dabei können beispielsweise Spannungen vorzugsweise direkt über einen Spannungsteile von einem internen Analog-Digital-Umsetzer (ADC) erfasst und digitalisiert werden. Der Strom kann zum Beispiel mit Hilfe eines Shunts gemessen werden, wobei insbesondere ein Spannungsabfall ermittelt und ausgewertet wird, um die Werte für den elektrischen Strom zu erhalten.

Es ist im Sinne der Erfindung ganz besonders bevorzugt, dass die Werkzeugmaschine eine Sensorsystem zur Erfassung einer Position des Rotors der Werkzeugmaschine umfasst. Dabei kann es sich vorzugsweise um eine Winkelangabe alpha_Rotor handeln. Vorzugsweise kann dieses Sensorsystem aus den Leistungselektroniken heraus mit elektrischer Energie versorgt werden. Es ist im Sinne der Erfindung bevorzugt, dass die Position des Rotors der Werkzeugmaschine erfasst und verwendet wird, um die Motorphasen des Motors korrekt zu bestromen. Darüber hinaus kann aus diesem Sensorsignal auch die Drehzahl bzw. die Winkelgeschwindigkeit des Motors ermittelt werden.

Es ist im Sinne der Erfindung bevorzugt, dass die Leistungselektroniken Steuervorrichtungen umfassen. Mithin umfasst die erste Leistungselektronik eine erste Steuervorrichtung, während die zweite Leistungselektronik eine zweite Steuervorrichtung aufweist. Es ist im Sinne der Erfindung bevorzugt, dass die Steuervorrichtungen bevorzugt auch als "Steuerungen" bezeichnet werden. Vorteilhafterweise liefern die Sensoren und Messvorrichtungen Mess- und Zustandsdaten an die beiden Steuerungen. Es ist im Sinne der Erfindung bevorzugt, dass die von den Sensoren und Messvorrichtungen ermittelten Mess- und Zustandsdaten, wie zum Beispiel Winkelsignale, Spannungen, Ströme und/oder Temperaturen, darstellen. Es ist im Sinne der Erfindung bevorzugt, dass insbesondere die Steuervorrichtungen der Leistungselektroniken über die Kommunikationsverbindung miteinander kommunizieren.

Es ist im Sinne der Erfindung bevorzugt, dass die Zustandsdaten, die von den Leistungselektroniken bzw. ihre Mess- und Sensorsystemen ermittelt werden, Stromwerte und/oder Spannungswerte umfassen, die eine Leistungsfähigkeit der Akkumulatoren beschreiben. Vorzugsweise können die Leistungselektroniken einen Zustand der ihnen zugeordneten Akkumulatoren durch eine Messung der Betriebsgrößen Spannung (U1, U2) und/oder Strom (I1, I2) ermitteln. Dabei steht der Index "1" für die Strom- oder Spannungswerte des ersten Akkumulators, während der Index "2" die Strom- oder Spannungswerte des zweiten Akkumulators beschreibt. Es stellt einen wesentlichen Vorteil der Erfindung dar, dass eine Leistungsfähigkeit der Akkumulatoren unter Verwendung der Strom- und/oder Spannungswerte ermittelt werden kann.

Ein Ladungsausgleich zwischen den Akkumulatoren der Werkzeugmaschine kann beispielsweise durch eine Optimierung basierend auf den Spannungswerten der Akkus ermöglicht werden. Der Ladungsausgleich erfolgt insbesondere unter Verwendung der Ladungsausgleichs-Vorrichtungen der Leistungselektroniken der Werkzeugmaschine. Diese Ladungsausgleichs-Vorrichtungen stellen sog. "Balancing-Regelungsblöcke" dar, in denen sich die sich Ausgleichsströme vorzugsweise wie folgt ergeben:

$$I_{ausgeglichen\_1} = I \cdot U_1 / (U_1 + U_2) \quad und \quad I_{ausgeglichen\_2} = I \cdot U_2 / (U_1 + U_2)$$

Der Buchstabe "I" steht dabei vorzugsweise für den Sollstrom aus dem Drehzahlregler.

Es ist im Sinne der Erfindung bevorzugt, dass die Zustandsdaten zur Optimierung des Ladungsausgleichs ausgewählt sind aus einer Gruppe umfassend: Ladung der Akkumulatoren, Temperatur der Akkumulatoren, Quellspannung der Akkumulatoren, maximaler Entladestrom der Ackumulatoren und/oder optimaler Entladestrom der Akkumulatoren, ohne darauf beschränkt zu sein. Darüber hinaus kann eine Temperatur der Elektronik der Werkzeugmaschine dazu verwendet werden, einen Ladungsausgleich zwischen den beiden Akkumulatoren der Werkzeugmaschine zu optimieren. In allgemeiner Form lässt sich die oben genannte Formel unter Verwendung weiterer Optimierungskriterien k und Gewichtungen n wie folgt beschreiben:

$$I_{ausgeglichen\_2} = I \cdot (n_1 \cdot k_1 + n_2 \cdot k_2 + n_3 \cdot k_3 + \ldots)$$

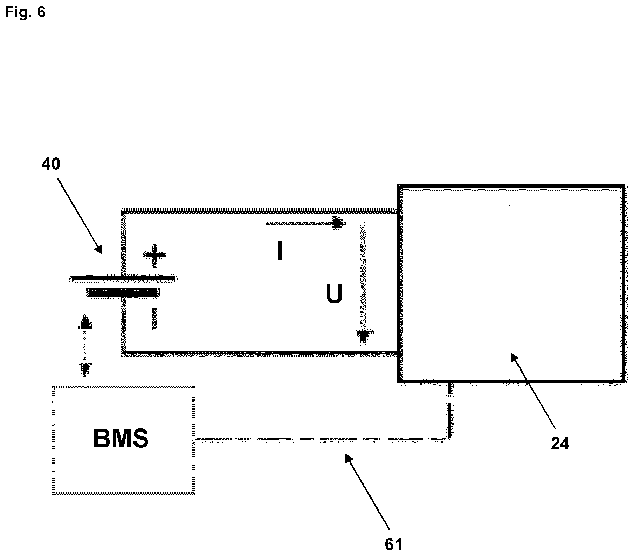

Um weiteres Optimierungspotential zu nutzen, können über eine Kommunikationsverbindung mit einem Batterie-Management-System (BMS) und/oder einem Zell-Management-System (ZMS) Eigenschaften und Zustände der Akkumulatoren erfasst werden. Synonym für den Begriff "Zell-Management-System (ZMS)" kann im Kontext der vorliegenden Erfindung auch der Begriff "Cell-Management-System (CMS)" verwendet werden. Die Werkzeugmaschine kann dazu ein Batterie-Management-System und/oder ein Zell-Management-System umfassen, wobei das Batterie-Management-System und/oder das Zell-Management-System dazu eingerichtet ist/sind, Zustandsdaten in Bezug auf die Akkumulatoren der Werkzeugmaschine zu erfassen. Eine Ausgestaltung der Erfindung mit einem Batterie-Management-System (BMS) ist in Fig. 6 abgebildet.

Es ist im Sinne der Erfindung bevorzugt, dass die Werkzeugmaschine mindestens eine Vorrichtung zur Drehzahlregelung umfasst, wobei die mindestens eine Vorrichtung zur Drehzahlregelung den Ladungsausgleichs-Vorrichtung vorgeschaltet ist. Das bedeutet mit anderen Worten, dass die Drehzahlregelungs-Vorrichtung vor dem "Balancing-Regelungsblock" innerhalb der Leistungselektronik vorgesehen ist. Vorzugsweise ist somit die Drehzahlregelungs-Vorrichtung innerhalb des Leistungspfades vor der Ladungsausgleichs-Vorrichtung vorgesehen, d.h. der Ladungsausgleich erfolgt nach einer etwaigen Drehzahlregelung. Es ist im Sinne der Erfindung bevorzugt, dass die Vorrichtung zur Regelung der Drehzahl der Werkzeugmaschine Bestandteil der Leistungselektronik ist. Es ist im Sinne der Erfindung bevorzugt, dass jede der beiden Leistungselektroniken eine Vorrichtung zur Drehzahlregelung umfasst. Es kann aber auch bevorzugt sein, dass nur einer der beiden Leistungselektroniken eine Drehzahlregelungs-Vorrichtung aufweist.

Es ist im Sinne der Erfindung bevorzugt, dass die Leistungselektroniken Vorrichtungen zur Stromregelung umfassen. Diese Vorrichtungen zur Stromregelung sind vorzugsweise der Ladungsausgleichs-Vorrichtung nachgeschaltet. Das bedeutet mit anderen Worten, dass die Stromregelungs-Vorrichtung nach dem "Balancing-Regelungsblock" innerhalb der Leistungselektronik vorgesehen ist. Vorzugsweise ist somit die Stromregelungs-Vorrichtung innerhalb des Leistungspfades hinter der Ladungsausgleichs-Vorrichtung vorgesehen, d.h. der Ladungsausgleich erfolgt vor einer etwaigen Regelung des Stroms. Es ist im Sinne der Erfindung bevorzugt, dass die Vorrichtung zur Regelung des Stroms Bestandteil der Leistungselektronik ist.

Es ist im Sinne der Erfindung bevorzugt, dass die Vorrichtung zur Drehzahlregelung, die Vorrichtung zur Stromregelung und/oder die Inverter als Block-, Trapez- oder Sinuskommutierung realisiert sind.

In einem zweiten Aspekt betrifft die Erfindung ein Verfahren zur Durchführung eines Ladungsausgleichs zwischen zwei Akkumulatoren in einer Werkzeugmaschine, wobei das Verfahren durch folgende Verfahrensschritte gekennzeichnet ist:

a) Betrieb der Werkzeugmaschine, wobei der Motor der Werkzeugmaschine von dem ersten Akkumulator und dem zweiten Akkumulator mit elektrischer Energie versorgt wird,

b) Ermittlung von Zustandsdaten in Bezug auf die Akkumulatoren durch die Leistungselektroniken,

c) Durchführung des Ladungsausgleichs zwischen den Akkumulatoren in Abhängigkeit der zuvor ermittelten Zustandsdaten durch die Ladungsausgleichs-Vorrichtungen der Leistungselektroniken.

Die Durchführung des Ladungsausgleichs erfolgt vorteilhafterweise durch unterschiedliche Lastaufteilung über die Ladungsausgleichs-Vorrichtungen der Leistungselektroniken.

In dem vorgeschlagenen Aufbau eines Elektromotors ist ein Rotor im Inneren des Motors angeordnet, während der Stator um den Rotor herum angeordnet vorliegt. Der Stator kann beispielsweise drei Stator-Spulen-Paare umfassen, die jeweils aus einer ersten und einer zweiten Stator-Spule bestehen können. Die Stator-Spulen können insbesondere kreisförmig um den Rotor des Motors der Werkzeugmaschine angeordnet vorliegen. Es ist im Sinne der Erfindung bevorzugt, dass sich die Stator-Spulen eines Stator-Spulen-Paares innerhalb des Stators im Wesentlichen gegenüberliegen.

Es ist im Sinne der Erfindung bevorzugt, dass die Stator-Spulen des Stators in dem Sinne gleich oder im Wesentlichen gleich gewickelt sind, dass ihre Wicklungen eine erste Draht-Schicht und eine zweite Draht-Schicht umfassen, wobei die Draht-Schichten so ausgebildet sind, dass sie einen Betrieb des Motors der Werkzeugmaschine mit einer Drehzahl im Bereich der Drehzahl eines Vergleichsmotors, aber im Wesentlichen halber Leistung im Vergleich zu dem Vergleichsmotor ermöglichen. Der Betrieb des Motors mit halber Leistung im Vergleich zu einem Vergleichsmotor wird insbesondere durch die Vorsehung von zwei Draht-Schichten ermöglicht, die in den Stator-Spulen vorhanden sind und die eine erste und eine zweite Wicklung des Stators des Motors der Werkzeugmaschine bilden.

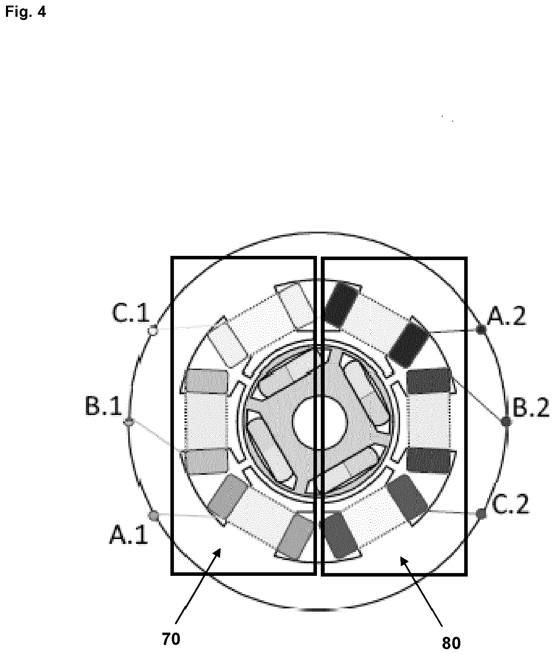

In einer Ausgestaltung der Erfindung ist es bevorzugt, dass die ersten Stator-Spulen die erste Wicklung umfassen und die zweiten Stator-Spulen die zweite Wicklung umfassen. Vorzugsweise umfasst der Stator in dieser Ausgestaltung drei Spulen-Paare, wobei jedes Spulen-Paar eine erste und eine zweite Spule umfasst. Die ersten Spulen, d.h. die erste Spule des ersten, zweiten und dritten Spulen-Paars, umfassen die erste Wicklung des Stators, während die zweiten Spulen, d.h. die zweite Spule des ersten, zweiten und dritten Spulen-Paars, die zweite Wicklung des Stators umfassen. Eine solche Ausgestaltung der Erfindung ist in Fig. 4 dargestellt.

Es ist im Sinne der Erfindung bevorzugt, dass der Stator zweimal im Wesentlichen identisch bewickelt wird. Die Vorsehung eines Stators mit zwei Wicklungen wird im Sinne der Erfindung bevorzugt als "doppelt gewickelter Stator" bezeichnet. Die "doppelte Wicklung" wird insbesondere durch die erste Wicklung und die zweite Wicklung des Stators erreicht, wobei die Wicklungen je eine Draht-Schicht umfassen. Dabei bildet die Wicklung mit der ersten Draht-Schicht jeweils die erste Wicklung der Stator-Spule und die Wicklung mit der zweiten Draht-Schicht die zweite Wicklung der Stator-Spule. Vorzugsweise ist jede der Wicklungen so ausgelegt, dass die Wicklung den Motor der Werkzeugmaschine bei voller Drehzahl und halber Leistung betreiben kann. Somit wirkt der doppelt gewickelte Stator wie zwei einzelne Motoren, die allerdings auf einem Stator angeordnet bzw. aufgewickelt sind. Es ist im Sinne der Erfindung bevorzugt, dass sich die Teil-Leistungen der beiden Wicklungen im Wesentlichen zu der gesamten Leistung eines Vergleichsmotors aufaddieren, wobei die Stator-Spulen des Vergleichsmotors im Wesentlichen vollständig mit einer durchgehenden Draht-Schicht umwickelt sind. Dieser letzte Nebensatz bedeutet mit anderen Worten bevorzugt, dass die Angabe der ganzen oder halben Leistung oder Drehzahl im Kontext der vorliegenden Erfindung in Bezug auf einen Vergleichsmotor erfolgt, wobei der fiktive Vergleichsmotor dadurch charakterisiert ist, dass er im Wesentlichen vollständig mit einer durchgehenden Draht-Schicht umwickelt ist. Es ist im Sinne der Erfindung bevorzugt, dass die die Spulen des Vergleichsmotors im Vergleich zu den Spulen des Motors der vorliegenden Erfindung die gleiche Windungszahl, aber einen doppelten Drahtdurchmesser aufweisen. Mit anderen Worten sind die Spulen des Vergleichsmotors mit einem Draht gewickelt, dessen Durchmesser im Wesentlichen doppelt so groß ist wie bei dem Motor der vorliegenden Erfindung.

Es ist im Sinne der Erfindung bevorzugt, dass die erste Wicklung der Stator-Spulen von einem ersten Inverter bestromt wird, während die zweite Wicklung der Stator-Spulen von einem zweiten Inverter bestromt wird, so dass in Summe der beiden Wicklungen eine Leistung im Bereich des Vergleichsmotors für den Motor der Werkzeugmaschine bereitgestellt werden kann. Mit anderen Worten kann im Wesentlichen die gesamte Leistung eines Vergleichsmotors angefahren werden, wenn die Wicklungen des Stators von je einem Inverter bestromt werden. Vorzugsweise trägt jede Wicklung im Wesentlichen die Hälfte der Gesamt-Leistung eines Vergleichsmotors bei. Mit anderen Worten besteht der nominale Beitrag jeder der beiden Wicklungsschichten ca. 50 % der Leistung des Vergleichsmotors.

Es ist im Sinne der Erfindung bevorzugt, dass der Vergleichsmotor keine zwei Wicklungen bzw. keine zwei Draht-Schichten umfasst, sondern lediglich eine Wicklung und eine Draht-Schicht, die die Wicklung bildet.

Im Kontext der Erfindung wird ein Verfahren zum Betrieb einer Werkzeugmaschine vorgeschlagen, wobei die erste Wicklung der Stator-Spulen von einem ersten Inverter bestromt wird, während die zweite Wicklung der Stator-Spulen von einem zweiten Inverter bestromt wird, so dass eine Leistung im Bereich des Vergleichsmotors für den Motor der Werkzeugmaschine bereitgestellt wird. Es ist im Sinne der Erfindung insbesondere bevorzugt, dass durch die Bestromung der Wicklungen durch die beiden Inverter die volle Leistung des Motors bereitgestellt werden kann, wobei diese volle Leistung vorzugsweise der vollen Leistung des Vergleichsmotors entspricht.

Es ist im Sinne der Erfindung bevorzugt, dass die ersten Draht-Schichten der Stator-Spulen, die eine erste Wicklung bilden, von einem ersten Inverter bestromt werden, während die zweiten Draht-Schichten, die eine zweite Wicklung bilden, von einem zweiten Inverter bestromt werden.

Es ist im Sinne der Erfindung bevorzugt, dass die Werkzeugmaschine einen ersten Akkumulator und einen zweiten Akkumulator umfasst. Mit dem im Kontext der vorliegenden Erfindung vorgeschlagenen doppelt gewickelten Stator kann ein Ladungsausgleich zwischen den Akkumulatoren der Werkzeugmaschine besonders einfach durchgeführt werden. Es ist insbesondere möglich, dass der Ladungsausgleich in beide Richtungen erfolgen kann. Dieser beidseitige Ladungsausgleich kann insbesondere dann stattfinden, wenn die Werkzeugmaschine im Stillstand ist.

Es ist im Sinne der Erfindung bevorzugt, dass der erste Akkumulator einen ersten Ladestand aufweist und der zweite Akkumulator einen zweiten Ladestand aufweist, wobei die Ladestände mittels dem zuvor beschriebenen Ladungsausgleich insbesondere mit Hilfe der Brückenschaltung ausgeglichen werden können, wenn die Werkzeugmaschine im Stillstand ist. Beispielsweise kann, wenn der erste Ladestand des ersten Akkus 75 % beträgt und der zweite Ladestand des zweiten Akkus 25 %, mit der Erfindung ein Ladungsausgleich mit dem Ziel durchgeführt werden, dass an dessen Ende beide Akkumulatoren einen Ladestand von etwa 50 % haben. Insbesondere ermöglicht ein so durchgeführter Ladungsausgleich, dass die Werkzeugmaschine länger effektiv genutzt werden kann, weil die Ladungen innerhalb der Akkumulatoren besser verteilt und so ausgenutzt werden können. Insbesondere wird die Situation vermieden, dass die Arbeit mit der Werkzeugmaschine beendet werden muss, obwohl einer der Akkumulatoren noch gut geladen ist.

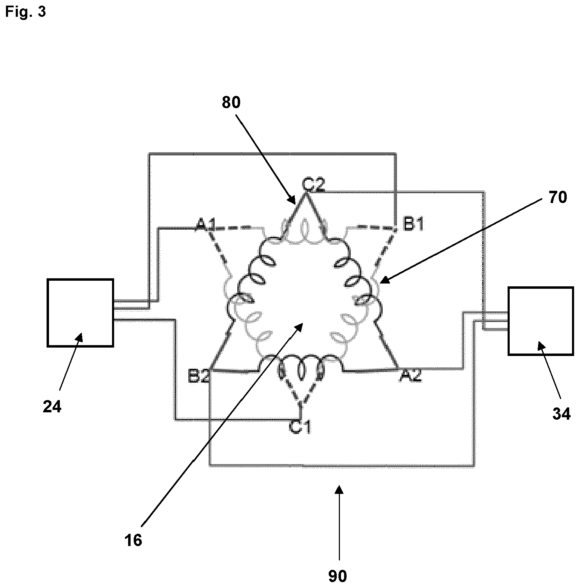

In Fig. 3 ist eine bevorzugte Ausgestaltung der Erfindung dargestellt, bei der die erste Wicklung über einen ersten Inverter mit einem ersten Akku verbunden ist, während die zweite Wicklung über einen zweiten Inverter mit einem zweiten Akku verbunden ist. Mit der in Fig. 3 dargestellten Schaltung kann ein Ladungsausgleich vorteilhafterweise sowohl bei Betrieb, als auch bei Stillstand der Werkzeugmaschine ermöglicht werden.

Im Kontext der vorliegenden Erfindung wird auch ein Verfahren zur Durchführung eines Ladungsausgleichs zwischen zwei Akkumulatoren in einer Werkzeugmaschine offenbart, wobei die Werkzeugmaschine einen ersten Inverter zur Bestromung von ersten Stator-Spulen und einen zweiten Inverter zur Bestromung von zweiten Stator-Spulen umfasst, wobei die Inverter mit den Stator-Spulen eine Brückenschaltung bilden, die zur Durchführung eines Ladungsausgleichs zwischen den Akkumulatoren der Werkzeugmaschine eingerichtet ist. Es ist im Sinne der Erfindung bevorzugt, dass die Stator-Spulen einen Stator bilden, der eine erste Wicklung und eine zweite Wicklung aufweist, wobei der Ladungsausgleich dadurch erfolgt, dass elektrische Energie von der ersten Wicklung auf die zweite Wicklung des Stators übertragen wird, oder umgekehrt.

Weitere Vorteile ergeben sich aus der folgenden Figurenbeschreibung. In den Figuren ist ein Ausführungsbeispiel der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigt:

Fig. 1 Ausführungsbeispiel für einen doppelt gewickelten Stator gemäß einer bevorzugten Ausgestaltung der Erfindung

Fig. 2 Darstellung einer möglichen Ausgestaltung des Stators mit drei Stator-Spulen-Paaren

Fig. 3 beispielhaftes Schaltbild für einen doppelt gewickelten Stator mit zwei Akkumulatoren

Fig. 4 Darstellung einer bevorzugten Ausgestaltung des Stators, bei der die erste und die zweite Wicklung jeweils auf den ersten und zweiten Spulen der Stator-Spulen-Paare angeordnet sind

Fig. 5 beispielhafter Aufbau einer Grundschaltung einer Werkzeugmaschine mit zwei Akkumulatoren

Fig. 6 Darstellung einer bevorzugten Ausführungsform der Erfindung mit einem Batterie-Management-System (BMS)

Fig. 7 beispielhafter Aufbau einer bevorzugten Ausführungsform der ersten Leistungselektronik der vorgeschlagenen Werkzeugmaschine mit zwei Akkumulatoren

Fig. 8 Darstellung einer bevorzugten Ausführungsform der Erfindung mit nur einem Drehzahlregler

Fig. 9    Darstellung einer bevorzugten Ausführungsform der beiden Wicklungssysteme der Erfindung

**Ausführungsbeispiele und Figurenbeschreibung:**

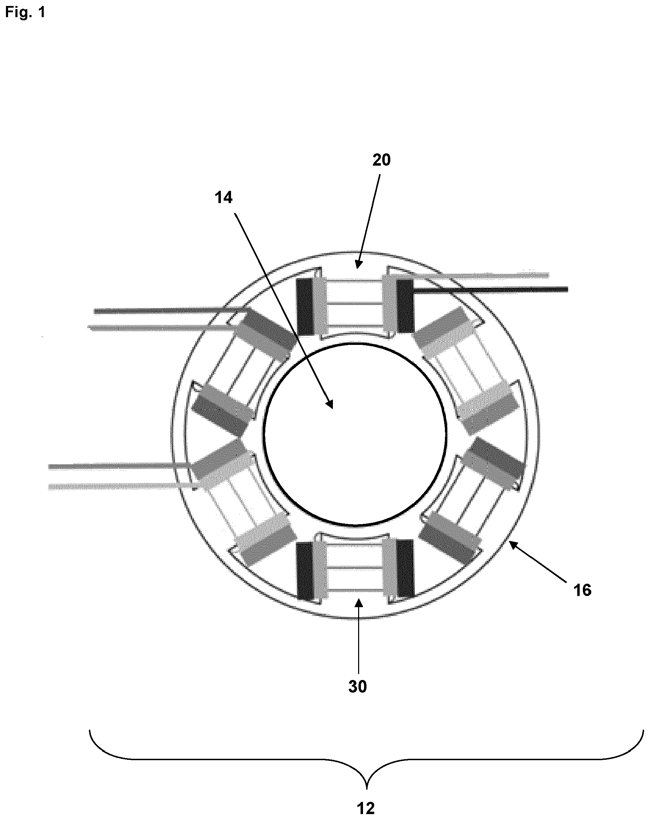

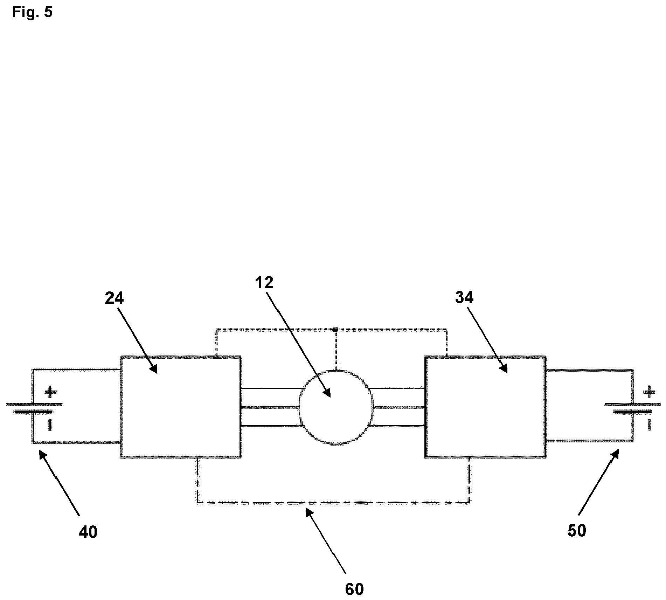

In den Fig. 1 bis 4 werden Einzelheiten zu dem Motor 12 der vorgeschlagenen Werkzeugmaschine 10 offenbart. Einzelheiten und Schaltbilder zum Verfahren zur Durchführung eines Ladungsausgleichs und zu der dafür vorgesehenen Werkzeugmaschine 10 finden sich in den Fig. 5 bis 8.

Fig. 1 zeigt eine beispielhafte Ausgestaltung des vorgeschlagenen Motors 12 der Werkzeugmaschine 10, wobei eine Werkzeugmaschine 10 in den Figuren nicht dargestellt wird. Zu sehen sind in Fig. 1 der Rotor 14 und der Stator 16 des Motors 12 der Werkzeugmaschine 10, bei dem es sich vorzugsweise um einen bürstenlosen Elektromotor handelt. Der Stator 16 umfasst eine Reihe von Stator-Spulen 20, 30, die beispielsweise paarweise angeordnet sein können oder Stator-Spulen-Paare 18 bilden können. Vorzugsweise kann je eine Gruppe von Stator-Spulen als erste Stator-Spulen 20 und die andere Gruppe von Stator-Spulen als zweite Stator-Spulen 30 bezeichnet werden. Der Stator 16 des Motors 12 der Werkzeugmaschine 10 umfasst eine erste Wicklung 70 und eine zweite Wicklung 80, wobei die Wicklungen 70, 80 jeweils eine Draht-Schicht umfassen können. Es ist im Sinne der Erfindung bevorzugt, dass die erste Wicklung 70 eine erste Draht-Schicht umfasst, während die zweite Wicklung 80 eine zweite Draht-Schicht umfasst. In einer möglichen Ausgestaltung der Erfindung umfasst jede Stator-Spule 20, 30 je eine erste Draht-Schicht und eine zweite Draht-Schicht, wobei die ersten Draht-Schichten der Stator-Spulen 20, 30 die erste Wicklung 70 des Stators 16 bilden, während die zweiten Draht-Schichten der Stator-Spulen 20, 30 die zweite Wicklung 80 des Stators 16 bilden. In einer anderen Ausgestaltung der Erfindung die ersten Stator-Spulen die erste Wicklung und die zweiten Stator-Spulen die zweite Wicklung. Mit anderen Worten wird die erste Wicklung 70 in dieser Ausgestaltung der Erfindung um die Gruppe der ersten Stator-Spulen 20 gewickelt, während die zweite Wicklung 80 um die Gruppe der zweiten Stator-Spulen 30 gewickelt wird.

Jede der beiden Wicklungen 70, 80 ermöglicht einen Betrieb der Werkzeugmaschine 10 dergestalt, dass eine volle Drehzahl, aber lediglich eine halbe Leistung im Vergleich zum Betrieb eines Vergleichsmotors erbracht werden kann. Der Vergleichsmotor entspricht im Wesentlichen dem vorgeschlagenen Motor, allerdings weist der Stator des Vergleichsmotors lediglich eine Wicklung, d.h. eine Draht-Schicht, auf. Vorzugsweise wird jede der beiden Wicklungen 70, 80 des vorgeschlagenen doppelt gewickelten Stators 16 von einem Inverter 24, 34 bestromt, wobei die erste Wicklung 70 des Stators 16 des Motors 12 der Werkzeugmaschine 10 von dem ersten Inverter 24 bestromt wird, während die zweite Wicklung 80 des Stators 16 des Motors 12 der Werkzeugmaschine 10 von dem zweiten Inverter 34 bestromt wird. Dadurch kann vorteilhafterweise die gesamte Leistung des Motors 12 angefahren werden, wobei jede Wicklungsschicht 70, 80 nominal im Wesentlichen 50 % zur Leistung des Motors 12 beiträgt. Die in Fig. 1 von dem Motor 12 abgehenden Leitungen verlaufen vorzugsweise in Richtung der Inverter 24, 34.

Es ist im Sinne der Erfindung bevorzugt, dass der Stator 16 der Werkzeugmaschine 10 Stator-Spulen 20, 30 aufweist, wobei die Stator-Spulen 20, 30 mit den Invertern 24, 34 eine Brückenschaltung 90 bilden. Vorzugsweise ist der Motor 12 der Werkzeugmaschine 10 ein bürstenloser Motor.

Fig. 1 zeigt darüber hinaus die elektrischen Leitungen, die jeweils zwischen den ersten Draht-Schichten 22 von nebeneinander liegenden Stator-Spulen 20, 30 bestehen können. Auf der Innenseite des Stators 16 können elektrische Leitungen angeordnet vorliegen, die jeweils die ersten Draht-Schichten innerhalb einer Stator-Spule 20, 30 miteinander verbinden. Die Innenseite des Stators 16 ist vorzugsweise dem Rotor 14 des Motors 12 der Werkzeugmaschine 10 zugewandt, da der Rotor 14 des Motors 12 der Werkzeugmaschine 10 im Inneren des Motors 12 der Werkzeugmaschine 10 angeordnet ist.

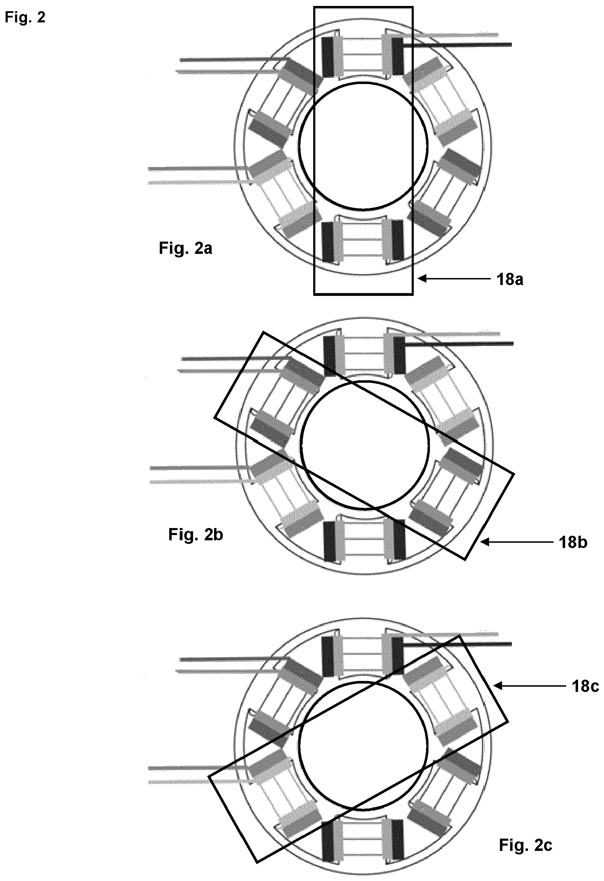

Fig. 2 zeigt eine mögliche Ausgestaltung des Stators 16 des Motors 12 der Werkzeugmaschine 10 mit drei Stator-Spulen-Paaren 18. Jedes Stator-Spulen-Paar 18 umfasst vorzugsweise eine erste Stator-Spule 20 und eine zweite Stator-Spule 30, wobei sich diese erste Stator-Spule 20 und die zweite Stator-Spule 30, die gemeinsam ein Stator-Spulen-Paar 18 bilden, vorzugsweise im Stator 16 des Motors 12 der Werkzeugmaschine 10 gegenüber liegen. Die drei Stator-Spulen-Paare 18 werden in Fig. 2 und den Teilfiguren 2a, 2b und 2c als Stator-Spulen-Paare 18a, 18b und 18c bezeichnet.

Fig. 3 zeigt ein Schaltbild für eine bevorzugte Ausführungsform vorgeschlagenen doppelt gewickelten Stators 16 mit zwei Invertern 24, 34. In der Mitte von Fig. 3 ist der Stator 16 des Motors 12 der Werkzeugmaschine 10 abgebildet. Die Buchstaben A, B, C stehen für die drei Stator-Spulen-Paare 18a, 18b und 18c, während die Zahlen 1 und 2 andeuten, ob es sich um die erste Stator-Spule 20 oder um die zweite Stator-Spule 30 eines Stator-Spulen-Paares 18 handelt. Mit anderen Worten bilden die Stator-Spulen A1, B1, C1 die ersten Stator-Spulen 20 der Stator-Spulen-Paare 18, während die Stator-Spulen A2, B2 und C2 die zweiten Stator-Spulen 30 der Stator-Spulen-Paare 18 bilden. Die ersten Stator-Spulen A1, B1, C1 sind vorzugsweise mit einem ersten Inverter 24 verbunden, während die zweiten Stator-Spulen A2, B2 und C2 vorzugsweise mit einem zweiten Inverter 34 verbunden sind. Es ist im Sinne der Erfindung bevorzugt, dass die Inverter 24, 34 und die Stator-Spulen 20, 30 eine Brückenschaltung 90 bzw. eine H-

Brücke bilden, wobei mit dieser Brückenschaltung 90 ein Ladungsausgleich zwischen den Ackumulatoren 40, 50 der Werkzeugmaschine 10 ermöglicht werden kann. Dies ist insbesondere dadurch möglich, dass der Motor 12 der Werkzeugmaschine 10 als Gleichstrom-Gleichstrom-Wandler eingesetzt wird. Dadurch kann elektrische Energie von der ersten Wicklung 70 des Stators 16 auf die zweite Wicklung 80 des Stators 16 übertragen werden, oder umgekehrt. Durch die Möglichkeit, elektrische Energie von einer Wicklung 70 des Stators 16 auf eine andere Wicklung 80 zu übertragen, kann die Energie auch von dem einen Akku 40 auf den anderen Akku 50 übertragen werden, so dass der Ausgleich von etwaigen Ladungsunterschieden erfolgen kann. Dieses Verfahren zum Ladungsausgleich kann insbesondere bei Stillstand der Werkzeugmaschine 10 durchgeführt werden. Sein Vorteil besteht insbesondere darin, dass elektrische Energie in beide Richtungen übertragen werden kann.

Mit der vorgeschlagenen Erfindung des doppelt gewickelten Stators 16 kann auch ein Ladungsausgleich während des Betriebs der Werkzeugmaschine 10 durchgeführt werden. Dazu kann der Inverter (Bsp: 24), der mit dem aufzuladenden Akku (Bsp: 40) verbunden ist, von dem Motorbetrieb in den generatorischen Betrieb umgeschaltet werden. Dadurch kann die Kapazität des volleren Akkus (Bsp: 50) verwendet werden, um den Akku (Bsp: 40) mit dem geringeren Ladestand wieder aufzuladen. Dieses Verfahren kann insbesondere durch das Einprägen eines kleinen Bremsmoments ermöglicht werden.

Fig. 4 zeigt eine Darstellung einer bevorzugten Ausgestaltung des Stators 16, bei der die erste Wicklung 70 und die zweite Wicklung 80 jeweils auf den ersten Spulen 20 und zweiten Spulen 30 der Stator-Spulen-Paare 18 angeordnet sind. Mit anderen Worten ist es bevorzugt, dass die ersten Stator-Spulen 20 die erste Wicklung 70 des Stators 16 umfassen und die zweiten Stator-Spulen 30 die zweite Wicklung 80 des Stators 16. Vorzugsweise umfasst der Stator 16 in dieser Ausgestaltung der Erfindung drei Spulen-Paare 18, wobei jedes Spulen-Paar 18a, 18b, 18c eine erste Spule 20 und eine zweite Spule 30 umfasst. Die ersten Spulen 20, d.h. die erste Spule 20 des ersten Spulen-Paars 18a, des zweiten Spulen-Paars 18b und des dritten Spulen-Paars 18c, umfassen die erste Wicklung 70 des Stators 16 des Motors 12 der Werkzeugmaschine 10, während die zweiten Spulen 30, d.h. die zweite Spule 30 des ersten Spulen-Paars 18a, des zweiten Spulen-Paars 18b und dritten Spulen-Paars 18c, die zweite Wicklung 80 des Stators 16 umfassen. Die ersten Stator-Spulen 20 werden in Fig. 4 mit A1, B1, C1 bezeichnet, während die zweiten Stator-Spulen 30 in Fig. 4 mit A2, B2, C2 bezeichnet werden.

Es ist im Sinne der Erfindung bevorzugt, dass auch die in Fig. 4 gezeigte Ausführungsform der Erfindung zum Betrieb des Motors 12 der Werkzeugmaschine 10 bzw. zur Durchführung eines Ladungsausgleiches zwischen den Akkumulatoren 40, 50 verwendet werden kann. Dabei wir die erste Wicklung 70 des Stators 16 von einem ersten Inverter 24 bestromt, während die zweite Wicklung 80 von einem zweiten Inverter 34 bestromt wird. Die Wicklungen 70, 80 sind so ausgebildet, dass sie den Motor 12 der Werkzeugmaschine 10 mit einer voller Drehzahl, aber halber Leistung im Vergleich zu einem Vergleichsmotor betreiben können. In Summe kann durch die Bestromung der beiden Wicklungen 70, 80 die volle Leistung für den Betrieb der Werkzeugmaschine 10 bereitgestellt werden. Die Inverter 24, 34 und die Stator-Spulen 20, 30 bilden auch im Kontext dieser bevorzugten Ausgestaltung der Erfindung eine Brückenschaltung 90 bzw. eine H-Brücke, mit der ein Ladungsausgleich zwischen den Akkumulatoren 40, 50 durchgeführt werden kann. Der Ladungsausgleich erfolgt vorzugsweise dadurch, dass elektrische Energie von der ersten Wicklung 70 auf die zweite Wicklung 80 des Stators 16 übertragen wird, oder umgekehrt.

Fig. 5 zeigt einen beispielhaften Aufbau einer Grundschaltung einer Werkzeugmaschine 10 mit zwei Akkumulatoren 40, 50. Die Akkumulatoren 40, 50 sind über die Motorinverter 24, 34 mit dem Motor 12 der Werkzeugmaschine 10 verbunden und versorgen den Motor 12 mit elektrischer Energie. Insbesondere ist der erste Akku 40 über den ersten Inverter 24 mit dem Motor 12 verbunden, während der zweite Akku 50 über den zweiten Inverter 34 mit dem Motor 12 verbunden vorliegt. Zwischen den Invertern 24, 34 besteht eine Kommunikationsverbindung 60, über die Zustandsdaten der Komponenten der Werkzeugmaschine 10 oder Betriebsparameter ausgetauscht werden können. Die Inverter 24, 34 sind jeweils Bestandteil einer Leistungselektronik 120, 130, die die Zufuhr von elektrischer Energie an den Motor 12 bzw. einen Ladungsausgleich zwischen den Akkumulatoren 40, 50 regeln. Es ist im Sinne der Erfindung bevorzugt, dass der erste Inverter 24 Bestandteil der ersten Leistungselektronik 120 ist, während der zweite Inverter 34 Bestandteil der zweiten Leistungselektronik 130 ist. Die Kommunikationsverbindung 60 kann als CAN- oder UART-Verbindung ausgebildet sein.

Fig. 6 zeigt eine bevorzugten Ausführungsform der Erfindung mit einem Batterie-Management-System (BMS). Insbesondere zeigt Fig. 6 einen Ausschnitt aus der ersten Leistungselektronik 120 der Werkzeugmaschine 10. Die erste Leistungselektronik 120 umfasst den ersten Motor-Inverter 24, der dazu eingerichtet ist, über eine zweite Kommunikationsverbindung 61 mit dem Batterie-Management-System (BMS) zu kommunizieren. In Fig. 6 steht der Buchstabe «I» für den Batterie-Strom und der Buchstabe «U» für die Batterie-Spannung. Diese Größen werden vorzugsweise für die Ladungsausgleichsvorrichtungen 100, 110 benötigt.

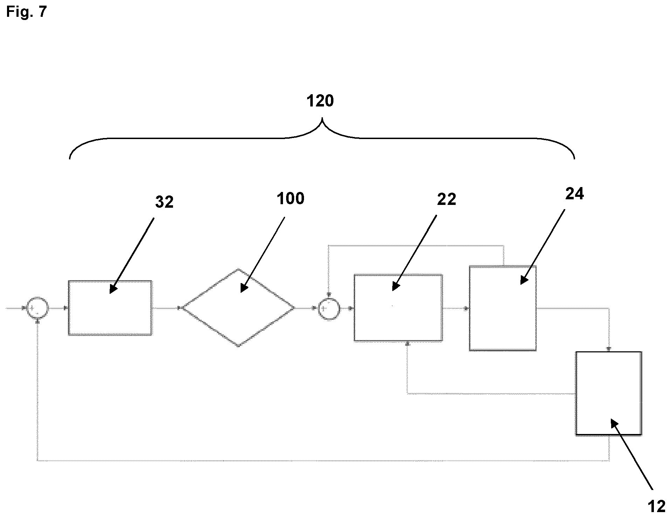

Fig. 7 zeigt einen beispielhaften Aufbau einer bevorzugten Ausführungsform der ersten Leistungselektronik 120 der vorgeschlagenen Werkzeugmaschine 10 mit zwei Akkumulatoren 40, 50. Als Komponenten der ersten Leistungselektronik 120 werden in Fig. 7 eine Vorrichtung zur Drehzahlregelung 32, eine erste Ladungsausgleichs-Vorrichtung 100, eine Vorrichtung 22 zur Regelung eines Stromflusses und ein erster Inverter 24 abgebildet. Die Ladungsausgleichs-Vorrichtung 100 kann im Sinne der Erfindung bevorzugt auch als "Balancing-Regelungsblock" bezeichnet werden. Es ist im Sinne der Erfindung bevorzugt, dass die vorgeschlagene Werkzeugmaschine 10 eine erste Leistungselektronik 120 und eine zweite Leistungselektronik 130 aufweist, wobei die zweite Leistungselektronik 130 vorzugsweise entsprechend der ersten Leistungselektronik 120 aufgebaut ist. Vom Motor 12 ausgehend umfasst die zweite Leistungselektronik 130 einen zweiten Inverter 34, eine Vorrichtung 22 zur Regelung eines Stromflusses, eine zweite Ladungsausgleichs-Vorrichtung 110 und eine Vorrichtung zur Drehzahlregelung 32.

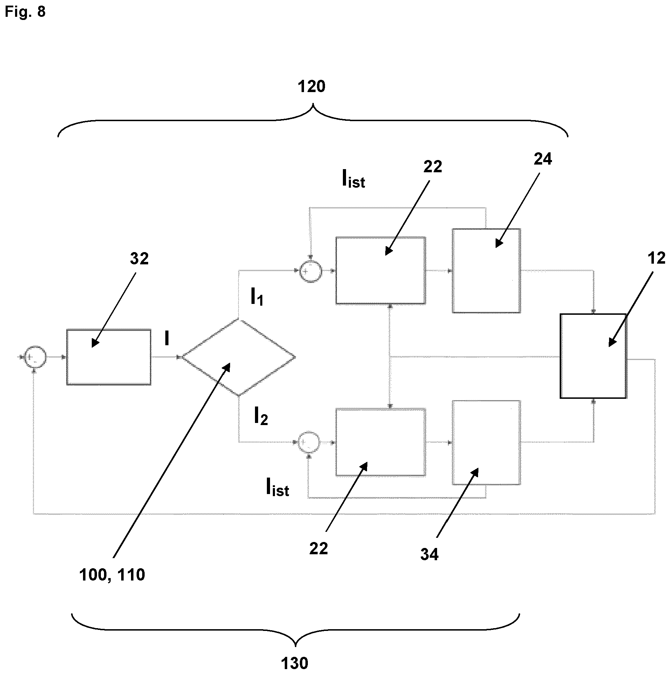

Fig. 8 zeigt eine bevorzugte Ausführungsform der Erfindung mit nur einer Vorrichtung zur Drehzahlregelung 32. Es kann im Sinne der Erfindung bevorzugt sein, dass die Werkzeugmaschine 10 lediglich eine Vorrichtung zur Drehzahlregelung 32 umfasst, die dann vorzugsweise vor der Ladungsausgleichs-Vorrichtung 100, 110 angeordnet vorliegt. Hinter der Ladungsausgleichs-Vorrichtung 100, 110 spaltet sich der Leistungspfad in der in Fig. 8 dargestellten Ausgestaltung der Erfindung wieder in eine erste Leistungselektronik 120 und eine zweite Leistungselektronik 130, wobei die erste Leistungselektronik 120 eine Vorrichtung 22 zum Messen eines Stromflusses, sowie einen ersten Motor-Inverter 24 umfasst. Die zweite Leistungselektronik 130 umfasst vorzugsweise ebenfalls eine Vorrichtung 22 zum Messen eines Stromflusses, sowie den zweiten Motor-Inverter 32.

Es ist im Sinne der Erfindung bevorzugt, dass die Werkzeugmaschine 10 eine Ladungsausgleichs-Vorrichtung (110 oder 110) umfasst, wobei diese eine Ladungsausgleichs-Vorrichtung (110 oder 110) mit einem der Inverter (24 oder 34) verbunden ist bzw. Bestandteil davon ist. Es kann im Sinne der Erfindung aber auch bevorzugt sein, dass die Werkzeugmaschine 10 zwei Ladungsausgleichs-Vorrichtungen (110 oder 110) umfasst, wobei jedem Inverter 24, 34 je eine Ladungsausgleichs-Vorrichtung (110 oder 110) zugeordnet ist. In Fig. 8 sind auch die Ist-Ströme I_ist abgebildet, die aus den Inverter-Blöcken 24, 34 herauskommen. Der Strom "I" zwischen dem Drehzahlregler 32 und der Ladungsausgleichs-Vorrichtung (110 oder 110) symbolisiert den Sollstrom aus dem Drehzahlregler 32.

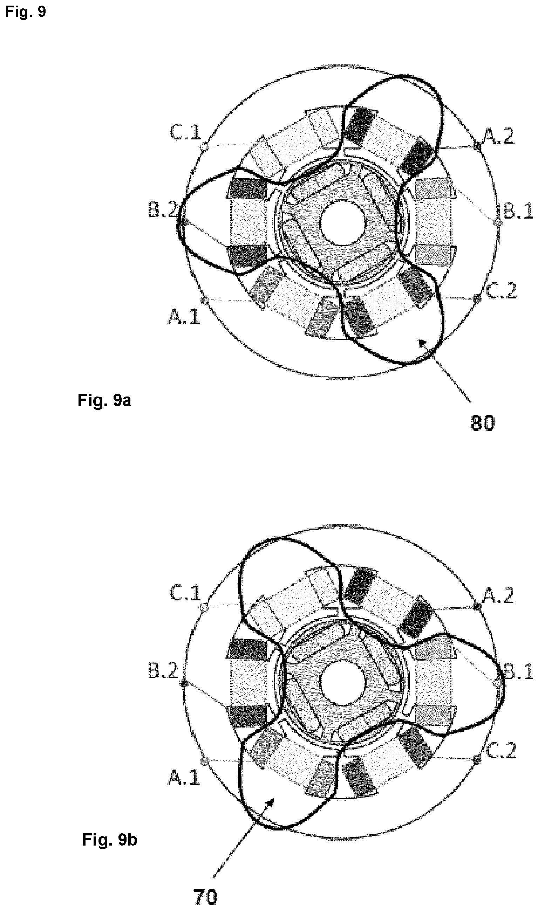

Fig. 9 zeigt eine bevorzugte Ausführungsform der beiden Wicklungssysteme 70, 80 der Erfindung.

### Bezugszeichenliste

| | |
|---|---|
| 10 | Werkzeugmaschine |
| 12 | Motor der Werkzeugmaschine |
| 14 | Rotor |
| 16 | Stator |
| 18 | Stator-Spulen-Paar |
| 20 | erste Stator-Spule |
| 22 | Vorrichtung zur Stromregelung |
| 24 | erster Inverter |
| 30 | zweite Stator-Spule |
| 32 | Vorrichtung zur Drehzahlregelung |
| 34 | zweiter Inverter |
| 40 | erster Akkumulator |
| 50 | zweiter Akkumulator |
| 60 | Kommunikationsverbindung zwischen den Invertern |
| 61 | zweite Kommunikationsverbindung zwischen einem Inverter und dem Batterie-Management-System (BMS) |
| 70 | erste Wicklung |
| 80 | zweite Wicklung |
| 90 | H-Brücke oder Brückenschaltung |
| 100 | erste Ladungsausgleichs-Vorrichtung |
| 110 | zweite Ladungsausgleichs-Vorrichtung |
| 120 | erste Leistungselektronik |
| 130 | zweite Leistungselektronik |

### Patentansprüche

**1.** Werkzeugmaschine (10) mit einem ersten Akkumulator (40) und einem zweiten Akkumulator (50), wobei die Werk-

**EP 4 109 701 A1**

zeugmaschine (10) eine erste Leistungselektronik (120) mit einem ersten Inverter (24) und eine zweite Leistungselektronik (130) mit einem zweiten Inverter (34) aufweist, wobei der erste Inverter (24) dem ersten Akkumulator (40) zugeordnet ist und der zweiten Inverter (34) dem zweiten Akkumulator (50) zugeordnet ist

**gekennzeichnet dadurch, dass**

die erste Leistungselektronik (120) eine erste Ladungsausgleichs-Vorrichtung (100) und die zweite Leistungselektronik (130) eine zweite Ladungsausgleichs-Vorrichtung (110) umfasst, wobei die Ladungsausgleichs-Vorrichtungen (100, 110) zur Durchführung eines Ladungsausgleichs zwischen den Akkumulatoren (40, 50) eingerichtet sind.

2. Werkzeugmaschine (10) nach Anspruch 1

**gekennzeichnet dadurch, dass**

der Motor (12) einen Rotor (14) und einem Stator (16) mit einer ersten Wicklung (70) und einer zweiten Wicklung (80) umfasst.

3. Werkzeugmaschine (10) nach Anspruch 1 oder 2

**gekennzeichnet dadurch, dass**

die Inverter (24, 34) dazu eingerichtet sind, Zustandsdaten in Bezug auf die Akkumulatoren (40, 50) zu ermitteln und über eine Kommunikationsverbindung (60), die zwischen den Invertern (24, 34) besteht, auszutauschen.

4. Werkzeugmaschine (10) nach Anspruch 3

**gekennzeichnet dadurch, dass**

die Zustandsdaten Stromwerte und/oder Spannungswerte umfassen, die eine Leistungsfähigkeit der Akkumulatoren (40, 50) beschreiben.

5. Werkzeugmaschine (10) nach einen der Ansprüche 3 oder 4

**gekennzeichnet dadurch, dass**

die Zustandsdaten ausgewählt sind aus einer Gruppe umfassend: Ladung der Akkumulatoren (40, 50), Temperatur der Akkumulatoren (40, 50), Quellspannung der Ackumulatoren (40, 50), maximaler Entladestrom der Akkumulatoren (40, 50) und/oder optimaler Entladestrom der Akkumulatoren (40, 50).

6. Werkzeugmaschine (10) nach einem der vorhergehenden Ansprüche

**gekennzeichnet dadurch, dass**

die Werkzeugmaschine (10) mindestens eine Vorrichtung (32) zur Drehzahlregelung umfasst.

7. Werkzeugmaschine (10) nach Anspruch 6

**gekennzeichnet dadurch, dass**

die mindestens eine Vorrichtung (32) zur Drehzahlregelung den Ladungsausgleichs-Vorrichtung (60) vorgeschaltet ist.

8. Werkzeugmaschine (10) nach einem der vorhergehenden Ansprüche

**gekennzeichnet dadurch, dass**

die Leistungselektroniken (120, 130) Vorrichtungen (22) zur Stromregelung umfassen.

9. Werkzeugmaschine (10) nach Anspruch 8

**gekennzeichnet dadurch, dass**

die Vorrichtungen (22) zur Stromregelung der Ladungsausgleichs-Vorrichtung (60) nachgeschaltet sind.

10. Werkzeugmaschine (10) nach einen der vorhergehenden Ansprüche

**gekennzeichnet dadurch, dass**

die Vorrichtung (18) zur Drehzahlregelung, die Vorrichtung (22) zur Stromregelung und/oder die Inverter (24, 34) als Block-, Trapez- oder Sinuskommutierung realisiert sind.

11. Werkzeugmaschine (10) nach einem der vorhergehenden Ansprüche

**gekennzeichnet dadurch, dass**

der Motor (12) ein bürstenloser Motor ist.

12. Werkzeugmaschine (10) nach einem der vorhergehenden Ansprüche

**gekennzeichnet dadurch, dass**

die Werkzeugmaschine (10) ein Batterie-Management-System (BMS) und/oder ein Zell-Management-System (ZMS) umfasst.

**13.** Werkzeugmaschine (10) nach Anspruch 12
**gekennzeichnet dadurch, dass**
das Batterie-Management-System (BMS) und/oder das Zell-Management-System (ZMS) dazu eingerichtet ist/sind, Zustandsdaten in Bezug auf die Akkumulatoren (40, 50) der Werkzeugmaschine (10) zu erfassen.

**14.** Verfahren zur Durchführung eines Ladungsausgleichs zwischen zwei Akkumulatoren (40, 50) in einer Werkzeugmaschine (10) nach einem der vorhergehenden Ansprüche, wobei das Verfahren durch folgende Verfahrensschritte **gekennzeichnet** ist:

a) Betrieb der Werkzeugmaschine (10), wobei der Motor (12) der Werkzeugmaschine (10) von dem ersten Akkumulator (40) und dem zweiten Akkumulator (50) mit elektrischer Energie versorgt wird,
b) Ermittlung von Zustandsdaten in Bezug auf die Akkumulatoren (40, 50) durch die Leistungselektroniken (120, 130),
c) Durchführung des Ladungsausgleichs zwischen den Akkumulatoren (40, 50) in Abhängigkeit der zuvor ermittelten Zustandsdaten durch die Ladungsausgleichs-Vorrichtungen (100, 110) der Leistungselektroniken (120, 130).

**15.** Verfahren nach Anspruch 14,
**gekennzeichnet dadurch, dass**
die Ladungsausgleich über eine unterschiedliche Lastaufteilung bewirkt wird.

**Fig. 1**

**Fig. 2**

Fig. 2a

18a

Fig. 2b

18b

18c

Fig. 2c

**Fig. 3**

**Fig. 4**

**Fig. 5**

Fig. 6

Fig. 7

Fig. 8

120

$I_{ist}$

22

24

32

$I_1$

I

12

100, 110

$I_2$

22

$I_{ist}$

34

130

Fig. 9

Fig. 9a

80

Fig. 9b

70

Europäisches
Patentamt

European
Patent Office

Office européen
des brevets

# EUROPÄISCHER RECHERCHENBERICHT

**Nummer der Anmeldung**

**EP 21 18 1105**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 11 2017 002637 T5 (MILWAUKEE ELECTRIC TOOL CORP [US]) 11. April 2019 (2019-04-11) * Zusammenfassung; Abbildungen 1, 5, 6 * * Absätze [0033] – [0035], [0057] – [0065] * ----- | 1-15 | INV. H02J7/00 B25F5/00 G01R31/382 |

**RECHERCHIERTE SACHGEBIETE (IPC)**

B25F
H02J

Der vorliegende Recherchenbericht wurde für alle Patentansprüche erstellt

| Recherchenort | Abschlußdatum der Recherche | Prüfer |
|---|---|---|
| **München** | **7. Dezember 2021** | **Hartmann, Martin** |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

&.......................................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 18 1105

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-12-2021

| Im Recherchenbericht angeführtes Patentdokument | Datum der Veröffentlichung | Mitglied(er) der Patentfamilie | | Datum der Veröffentlichung |
|---|---|---|---|---|
| DE 112017002637 T5 | 11-04-2019 | CN | 210092893 U | 18-02-2020 |
| | | CN | 213185534 U | 11-05-2021 |
| | | DE | 112017002637 T5 | 11-04-2019 |
| | | TW | M553883 U | 01-01-2018 |
| | | US | 2017346334 A1 | 30-11-2017 |
| | | US | 2020052524 A1 | 13-02-2020 |
| | | US | 2021359526 A1 | 18-11-2021 |
| | | WO | 2017205466 A1 | 30-11-2017 |

Für nähere Einzelheiten zu diesem Anhang : siehe Amtsblatt des Europäischen Patentamts, Nr.12/82

EPO FORM P0461